# EUROPÄISCHE PATENTANMELDUNG

(11) **EP 0 699 830 A2**
(43) Veröffentlichungstag der Anmeldung: **06.03.1996**
(21) Anmeldenummer: 95113203.4
(22) Anmeldetag: 23.08.1995
(51) Int. Cl.: F02B 27/02

(54) **Ansaugsystem für eine mehrzylindrige Brennkraftmaschine**

(30) Priorität: 03.09.1994 DE 4431539
(71) Anmelder: ADAM OPEL AG, D-65423 Rüsselsheim (DE)
(72) Erfinder: Grebe, Uwe Dieter, Dipl.-Ing., D-65468 Trebur (DE); Janthur, Ingo W., Dipl.-Ing., D-65428 Rüsselsheim (DE)
(74) Vertreter: Kümpfel, Heinz, Dipl.-Ing.

(57) **Zusammenfassung**

Mit der Erfindung ist ein Ansaugsystem für eine mehrzylindrige Brennkraftmaschine mit mehreren Einlaßventilen (3, 4) pro Brennraum (2) geschaffen, welches ein Schwingrohrsystem mit Sammelvolumen und dieses mit den Brennräumen (2) verbindenden Schwingrohren (7, 8) in Kombination mit einem Resonanzsystem, bestehend aus Resonanzrohren (12, 13) und Resonanzbehältern (9, 10), umfaßt. Jedem Einlaßventil (3, 4) ist ein Schwingrohr (7, 8) zugeordnet. Die Schwingrohre (7, 8) sind in Gruppen mit unterschiedlichen Längen und Querschnitten vorhanden. Jeder Gruppe ist ein Resonanzbehälter (9, 10) sowie ein in diesen einmündendes Resonanzrohr (12, 13) zugeordnet. Die Resonanzrohre (12, 13) sind mit steuerbaren Absperrorganen (16, 17) versehen. Bei niedrigen Drehzahlen der Brennkraftmaschine ist das Resonanzrohr (13) zu dem Resonanzbehälter (10) geöffnet und die Brennräume (2) werden durch die längeren Schwingrohre (8) und die Einlaßventile (4) geladen. Die anderen Einlaßventile (3) sind durch das Absperrorgan (16) praktisch abgeschaltet. Damit kann neben einem guten Ladeeffekt auch ein optimales Strömungsverhalten am Einlaßventil (4) erzielt werden. Bei höheren Drehzahlen dagegen erfolgt die Ladung durch die kürzeren Schwingrohre (7) und die Einlaßventile (3). Bei Vollast erfolgt die Ladung durch beide Schwingrohre (7 und 8). Die Erfindung ermöglicht einen gegenüber bekannten Ausführungen einfacheren Aufbau, eine bessere Führung der Ladung am Brennraum und eine vorteilhafte Anpassung des Schwingverhaltens der Gassäulen.

## Beschreibung

Die Erfindung betrifft ein Ansaugsystem für eine mehrzylindrige Brennkraftmaschine, das ein Schwingrohrsystem mit Sammelvolumen und dieses mit den Brennräumen verbindenden Schwingrohren in Kombination mit einem Resonanzsystem, bestehend aus Resonanzrohren und Resonanzbehältern, umfaßt, wobei jedem Brennraum mehrere Einlaßventile und mehrere steuerbare Schwingrohre zugeordnet sind.

Ein derartiges Ansaugsystem ist aus DE A 35 44 122 bekannt. Bei diesem führen zwei Resonanzrohre von einem Schwingungsausgleichsbehälter zu einem durch ein Ansperrorgan stellbares und so als Resonanzbehälter wirkendes Sammelvolumen, von welchem aus zu jedem Brennraum der Brennkraftmaschine jeweils zwei Schwingrohre vorgesehen sind. Je eines dieser Schwingrohre ist von großem Durchmesser und relativ kurz, und das jeweils andere ist von kleinem Durchmesser und relativ lang. Beide Schwingrohre münden in einen gemeinsamen Einlaßkanal vor dem Brennraum, welcher mit den Einlaßventilen der Brennkraftmaschine gesteuert ist. In den kurzen Schwingrohren ist jeweils brennraumnah ein Absperrorgan angeordnet. Durch Öffnen oder Schließen des Absperrorganes im Sammelvolumen kann das Schwingungsverhalten in den Resonanzbehältern beeinflußt werden, und durch Öffnen bzw. Schließen der Absperrorgane in den kurzen Schwingrohren kann der Querschnitt bzw. die wirksame Länge der beiden Schwingrohre verändert werden. Die Länge der Resonanzrohre, das Volumen der Resonanzbehälter sowie die Querschnitte und Längen der Schwingrohre sind so aufeinander abgestimmt, daß bei sinngemäßem Öffnen und Schließen der Absperrorgane ein Resonanzverhalten der geführten Gasmengen im Verhältnis zur Drehzahl der Brennkraftmaschine eintritt, welches eine verbesserte Füllung der Brennräume gegenüber einem stationären Ladevorgang ergibt.

Nachteilig ist bei diesem bekannten Ansaugsystem der baulich hohe Aufwand für die Anordnung eines Absperrorganes an jedem der kurzen Schwingrohre. Außerdem wird unabhängig von der Stellung der Absperrorgane immer der gesamte Querschnitt des Einlaßkanals zu den Brennräumen geflutet, so daß damit auch bei Vorhandensein von zwei Einlaßventilen beide Einlaßventile geflutet sind. Das kann bei niedrigen Drehzahlen zu unerwünscht niedrigen Gasgeschwindigkeiten im Einlaßkanal selbst sowie im Einlaßbereich des Brennraumes mit den bekannten nachteiligen Folgen führen.

Es ist somit Aufgabe der Erfindung, ein Ansaugsystem der eingangs genannten Art zu schaffen, dessen Bauaufwand gegenüber der bekannten vergleichbaren Anlage geringer ist und bei welcher bei niedrigen Drehzahlen einer damit ausgerüsteten Brennkraftmaschine mit zwei oder mehr Einlaßventilen auch dann, wenn stets beide bzw. alle Einlaßventile öffnen, also keine Ventilabschaltung vorgesehen ist, eine ausreichende Gasgeschwindigkeit im Einlaßbereich des Brennraumes erhalten bleibt.

Erfindungsgemäß wird diese Aufgabe dadurch gelöst, daß von einem durch einen Ansaugschnorchel oder einen Lader mit Luft versorgten Luftfilterkasten jeweils ein für jede Gruppe gleicher Einlaßventile aller Brennräume zugeordnetes Resonanzrohr zu jeweils einem diesem Resonanzrohr zugeordneten Resonanzbehälter führt, von jedem Resonanzbehälter zu jedem der diesem Resonanzbehälter zugeordneten Einlaßventile ein Schwingrohr führt, welches jeweils an getrennt geführte Ansaugkanäle für jedes der einem Brennraum zugeordneten Einlaßventile anschließt, Länge und Querschnitt aller von einem Resonanzbehälter wegführenden Schwingrohre gleich, aber gegenüber den Schwingrohren der anderen Resonanzbehälter unterschiedlich sind und bei einer Anzahl von n Resonanzrohren zumindest n-1 durch ein Absperrorgan steuerbar sind.

Damit ist es möglich, sowohl die wirksame Länge des Ansaugweges als auch den Ansaugquerschnitt zu steuern, wobei bei geringer Drehzahl der Brennkraftmaschine die längeren Resonanzrohre offen und die kurzen geschlossen sind. Damit gelangt aber auch an die am Ende des Ansaugweges der kurzen Resonanzrohre befindlichen Einlaßventile kein Gas mehr, d. h., der Gaswechsel findet dann ausschließlich durch die an offenen Resonanzrohren angeschlossenen Ansaugkanäle und Einlaßventile statt, so daß an diesen eine für die Gasführung im Brennraum ausreichende Gasgeschwindigkeit erhalten bleibt. Das Resonanzverhalten des dabei aktiven Ansaugsystems sichert eine gute Füllung und damit gutes Drehmomentverhalten der Brennkraftmaschine.

Bei mittleren Drehzahlen der Brennkraftmaschine dagegen, werden die längeren Resonanzrohre geschlossen und die kürzeren geöffnet. Bei hohen Drehzahlen und hoher Last sind alle Resonanzrohre geöffnet, d. h. alle vorhandenen Einlaßventile sind durchflutet, wobei der auf hohe Drehzahl abgestimmte Bereich des Ansaugsystems in Folge seiner Resonanz für eine zusätzliche Ladung des Brennraumes sorgt.

Da damit die wirksamen Ansaugquerschnitte und die wirksamen Ansaugweglängen geschaltet werden, tritt eine Wirkung ähnlich einer technisch sehr viel aufwendigeren Ventilabschaltung ein.

Die Absperrorgane werden vorteilhaft durch einen elektronischen Schaltkreis in Abhängigkeit von den Parametern der Brennkraftmaschine gesteuert.

Sind für die Einlaßventile des Zylinders verschiedene Ventilerhebungskurven fest vorgesehen, so kann die wirksame Ventilerhebung zusammen mit der Schaltung des Ansaugquerschnittes erfolgen (indirekte Variation der Ventilerhebung).

Damit können weitere Vorteile im Leerlauf, in der Teillast sowie im Vollastverhalten der Brennkraftmaschine durch angepaßte Wahl der Ventilerhebung erreicht werden.

Ein Ansaugsystem nach der Erfindung ist auch zwischen einem Lader, vorzugsweise einem Abgasturbolader, und den Brennräumen einer Brennkraftmaschine einsetzbar. Durch die über dem Betriebskennfeld der Brennkraftmaschine möglichen Änderungen in der Gasdynamik des Saugsystems wird das Instationärverhalten von aufgeladenen Motoren verbessert. Insbesondere Turbolader erlauben infolge der Trägheit des Laufzeuges nur eine verzögerte Änderung des Luftaufwandes. Diese Verzögerung kann durch ein erfindungsgemäßes Ansaugsystem weitgehend eliminiert werden, da die Brennkraftmaschine bei Lastwechseln die Momentanbedingungen hinter der Turbine als Umgebungsbedingungen vorfindet und so spontan reagieren kann; jede Änderung im gasdynamischen System bewirkt auch eine Änderung in den Eigenschaften der Selbstaufladung.

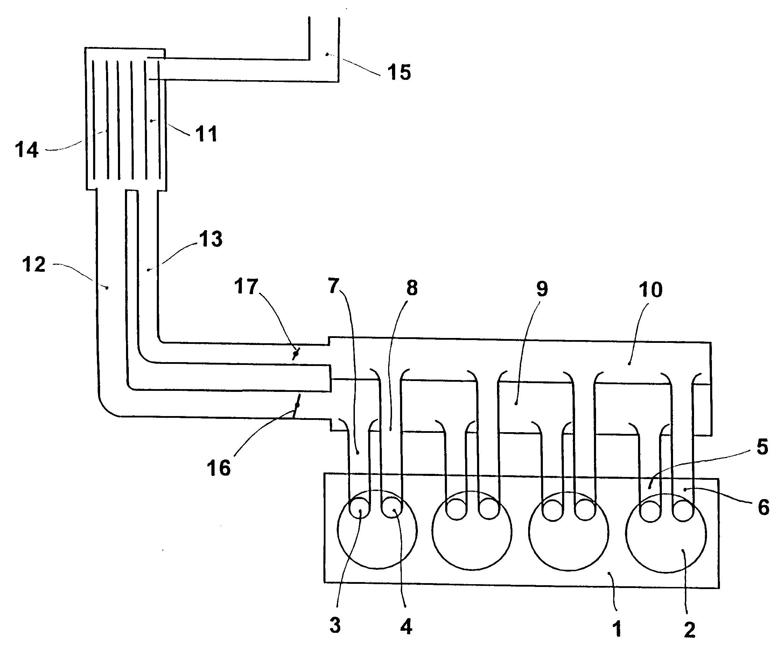

Ein Ausführungsbeispiel der Erfindung ist nachstehend anhand einer Zeichnung beschrieben. Die Zeichnung zeigt eine Vier-Zylinder-Brennkraftmaschine mit einem erfindungsgemäßen Ansaugsystem in schematischer Darstellung.

In einem Zylinderkopf 1 einer Vier-Zylinder-Reihenbrennkraftmaschine sind jedem Zylinder ein Brennraum 2 zugeordnet. Zu jedem der Brennräume 2 gehören zwei Einlaßventile 3 und 4, die am Ende von Ansaugkanälen 5 und 6 angeordnet sind. Jedem der im Zylinderkopf 1 verlaufenden Ansaugkanäle 5 und 6 schließt sich ein Schwingrohr 7 bzw. 8 an. Die Schwingrohre 7 sind gegenüber den Schwingrohren 8 im Querschnitt größer und in der Länge kürzer. Die Schwingrohre 7 münden in einem gemeinsamen Resonanzbehälter 9. Die anderen Schwingrohre 8 münden in einem zweiten Resonanzbehälter 10. Zwischen dem Resonanzbehälter 9 und einem Luftfilterkasten 11 verläuft ein Resonanzrohr 12. Ein weiteres Resonanzrohr 13 verläuft zwischen dem Resonanzbehälter 10 und dem Luftfilterkasten 11. Im Luftfilterkasten 11 befindet sich ein Luftfilter 14. Ein Ansaugschnorchel 15 führt dem Luftfilterkasten 11 Ansaugluft zu. In den Resonanzrohren 12 und 13 befinden sich nahe den Resonanzbehältern 9 und 10 Absperrorgane 16 bzw. 17.

Bei einer solchen Brennkraftmaschine werden im Normalfall die beiden Einlaßventile 3, 4 jedes Brennraumes 2 gleichzeitig betätigt, so daß sie gleichzeitig Öffnen und Schließen. Der dem ersten Einlaßventil 4 voranliegende Ansaugtrakt wirkt auf die Gasdynamik anders als der im anderen Einlaßventil 3 voranliegende Ansaugtrakt. Bei kleiner Drehzahl der Brennkraftmaschine ist das Absperrorgan 16 geschlossen und das Absperrorgan 17 geöffnet. Damit kann vom Luftfilterkasten 11 her nur über das Resonanzrohr 13, den Resonanzbehälter 10 und von diesem über die langen Schwingrohre 7, die Ansaugkanäle 6 und durch die Einlaßventile 4 Gas in die Brennräume 2 gelangen. Die Länge des Resonanzrohres 13 und die des Schwingrohres 7 sowie das Volumen des Resonanzbehälters 10 sind so abgestimmt, daß bei niedriger Drehzahl der Brennkraftmaschine ein gutes Eigenschwingverhalten der Gassäule, insbesondere im Schwingrohr 7, eintritt. Im Ergebnis kann so ein Nachladeeffekt erzielt werden. Infolge des relativ kleinen Querschnitts des Schwingrohrs 7 stellt sich dabei eine hohe Strömungsgeschwindigkeit ein, die sich auch durch den Ansaugkanal 6 und den Durchlaß am Einlaßventil 4 fortsetzt, da ja das andere Einlaßventil 3 bei diesem Betriebszustand am Gaswechsel nicht beteiligt ist. Somit kann die Gasführung auch bei den relativ geringen Gasmengen im unteren Teillastbereich auch im Brennraum 2 auf hoher Geschwindigkeit gehalten werden; ein Vorteil, welcher zu einem verbesserten Brennverhalten der Ladung und zu günstigeren Abgaswerten beiträgt.

Im oberen Teillastbereich der Brennkraftmaschine mit höheren Drehzahlen wird das Absperrorgan 16 geöffnet und das Absperrorgan 17 geschlossen. Vom Luftfilterkasten 11 her kann nun das Gas nur durch das Resonanzrohr 12, den Resonanzbehälter 9, das Schwingrohr 7, den Ansaugkanal 5 und durch das Einlaßventil 3 in den Brennraum 2 gelangen. Diese Gaswege sind entsprechend auf ein Schwingverhalten bei höheren Drehzahlen abgestimmt. Auch hier tritt wieder der vorteilhafte Effekt einer Nachladung und einer guten Gasführung infolge relativ hoher Gasgeschwindigkeiten im Bereich des Einlaßventils 3 ein.

Im Vollastbereich der Brennkraftmaschine werden sowohl das Absperrorgan 16 als auch das Absperrorgan 17 geöffnet. Die Brennräume 2 werden so über die Querschnitte beider Einlaßventile 3 und 4 geladen.

Bei einer solchen Ausführung der Erfindung kann die Laststeuerung der Brennkraftmaschine vollständig über die beiden Absperrorgane 16 und 17 erfolgen, wenn diese als kontinuierlich schließbare Absperrorgane, z. B. als Drosselklappen, ausgebildet sind.

Es entspricht jedoch auch der Erfindung, ein Absperrorgan wegzulassen und dafür das andere nur zwischen zwei Extremstellungen zu schalten, wobei die Laststeuerung durch ein zusätzliches Regelorgan, z. B. einer Drosselklappe, im Ansaugweg vor dem Luftfiltergehäuse 11 erfolgt.

Bei einer Vier-Zylinder-Brennkraftmaschine nach dem zuletzt geschilderten Ausführungsbeispiel könnte so das Absperrorgan 17 entfallen und dafür eine die Gesamtansaugmenge regelnde Drosselklappe vorgesehen sein.

Der Erfindung entspricht es auch, wenn dem Ansaugsystem ein Lader, vorzugsweise ein Abgasturbolader, vorangesetzt ist.

Weitere Ausführungsbeispiele der Erfindung sind darin zu sehen, daß bei mehr als zwei Einlaßventilen pro Brennraum auch entsprechend viele Ansaugtrakte vorgesehen sind, so daß z. B. bei drei Einlaßventilen pro Brennraum auch drei eigenständige schwingungstechnisch abgestimmte Ansaugtrakte vorhanden sind, die sinngemäß nebeneinander und nacheinander mit Veränderung von Drehzahl und Last der Brennkraftmaschine aufgesteuert bzw. zugesteuert werden.

Weiter kann jedem Einlaßaventil ein eigenes Ventilerhebungsprofil zugeordnet sein. Nur die Ventilerhebungen in den durchflossenen Kanälen werden wirksam. Dadurch läßt sich eine Variation der effektiven Ventilerhebung indirekt durch die Ansaugquerschnittsschaltung erreichen.

## Patentansprüche

1. Ansaugsystem für eine mehrzylindrige Brennkraftmaschine, das ein Schwingrohrsystem mit Sammelvolumen und dieses mit den Brennräumen verbindenden Schwingrohren in Kombination mit einem Resonanzsystem, bestehend aus Resonanzrohren und Resonanzbehältern, umfaßt, wobei jedem Brennraum mehrere Einlaßventile und mehrere steuerbare Schwingrohre zugeordnet sind, **dadurch gekennzeichnet,** daß von einem durch einen Ansaugschnorchel (15) oder einen Lader mit Luft versorgten Luftfilterkasten (11) jeweils ein für jede Gruppe gleichen Einlaßventilen (3; 4) aller Brennräume (3) zugeordnetes Resonanzrohr (12; 13) zu jeweils einem diesem Resonanzrohr (12; 13) zugeordneten Resonanzbehälter (9; 10) führt, von jedem Resonanzbehälter (9; 10) zu jedem der diesem Resonanzbehälter (9; 10) zugeordneten Einlaßventile (3; 4) ein Schwingrohr (7; 8) führt, welches jeweils an getrennt geführte Ansaugkanäle (5; 6) für jedes der einem Brennraum (2) zugeordneten Einlaßventile (3; 4) anschließt, Länge und Querschnitt aller von einem Resonanzbehälter (9; 10) wegführenden Schwingrohre (7; 8) gleich, aber gegenüber den Schwingrohren (8; 7) der anderen Resonanzbehälter (10; 9) unterschiedlich sind und bei einer Anzahl von n Resonanzrohren (12, 13) zumindest n-1 durch ein Absperrorgan (16, 17) steuerbar sind.

2. Ansaugsystem nach Anspruch 1, **dadurch gekennzeichnet,** daß die Absperrorgane (12, 13) in an sich bekannter Weise durch einen elektronischen Schaltkreis in Abhängigkeit von den Parametern der Brennkraftmaschine gesteuert sind.

3. Ansaugsystem nach Anspruch 2, **dadurch gekennzeichnet,** daß die Steuerung der Absperrorgane (12, 13) bei einer Brennkraftmaschine mit unterschiedlichen Ventilerhebungen der Gaswechselventile zusammen mit der Schaltung der wirksamen Ventilerhebungen der einzelnen Einlaßventile (3, 4) eines Brennraumes (2) erfolgt.

4. Ansaugsystem nach einem oder mehreren der vorangegangenen Ansprüche, **dadurch gekennzeichnet,** daß dem Luftfilterkasten (11) Luft durch den Lader eines Abgasturboladers zugeführt wird.
